# EUROPEAN PATENT SPECIFICATION

(11) **EP 0 689 987 B1**
(45) Date of publication and mention of the grant of the patent: **01.04.1998**
(21) Application number: 95110277.1
(22) Date of filing: 30.06.1995
(51) Int. Cl.: B62H 5/00, E05B 67/00

(54) **Locking device**
Blockiervorrichtung
Dispositif de blocage antivol

(30) Priority: 30.06.1994 JP 173626/94
(43) Date of publication of application: 03.01.1996
(73) Proprietor: KABUSHIKI KAISHA AIAISHI, Iwata-shi, Shizuoka-ken (JP)
(72) Inventor: Yamaoka, Hiroshi. c/o K.K. Aiaishi, Iwata-shi, Shizuoka-ken (JP)
(74) Representative: Grünecker, Kinkeldey, Stockmair & Schwanhäusser Anwaltssozietät

(56) References cited:
- EP-A- 0 638 473
- WO-A-93/24724
- DE-B- 1 008 599
- DE-U- 9 307 702
- US-A- 4 760 718
- US-A- 5 291 765

## Description

This invention relates to a locking device, for example for preventing a vehicle such as a motor cycle from being stolen in accordance with the preamble of claim 1.

A locking device of this kind, as disclosed in US-A-4 760 718, has been conventionally constituted as described below.

Namely the lock device consists of a plural number of rod-like members arranged in a row, with the rod-like members staggered alternately along the row. Ends of adjoining rod-like members overlap each other and jointed by a pivot shaft extending in the direction normal to the row so that the jointed rod-like members can make articulate movements. The rod-like members and the pivot shafts make up a lock rod capable of being bent and folded by the articulate movements of the rod-like members. A lock section is provided so that both ends of the bent lock rod are locked in a mutually connected state.

The lock section described above consists of a lock housing secured to one end of the lock rod and a lock section main part housed in the lock housing. The lock section main part makes it possible to lock the other end of the lock rod, to be freely removably inserted in the lock housing, in the inserted state.

For example, a motorcycle as an example of a vehicle is parked and prevention of theft of the motorcycle is intended, one end of an extended lock rod is passed between the spokes of a wheel, the lock rod is then made into a loop to surround the fork as an object to which the wheel is to be secured. Using a key on the locking section, both ends of the loop are locked in a connected state. Thus the wheel is prevented from rotating and locked to the front fork, and the motorcycle is prevented from being stolen.

When the lock device is not in use on the other hand, it can be folded into a compact size to be stored in a small space.

By the way, when it is intended to make the above described lock device more secure, it is conceivable to strengthen the lock section as the main part of the lock device.

However, if the lock section is made stronger, it tends to be greater in size. As a result, when the lock device is not in use and folded for storing, there is a problem that a portion of the lock section might largely bulge out and occupies a greater space for storing the lock device which is not compact.

In view of the above circumstances, it is an objective of the present invention to provide an improved locking device being compact in size when it is folded even when the main part of the locking device, that is the locking unit, has a high strength structure necessitating a relatively large size.

According to the present invention, this objective is achieved by the features of claim 1

According the present invention, said main portion of the lock housing is disposed offset towards the same side of a first rod member on which side a second rod member is disposed, said first rod member being connected with said lock housing and said second rod member being connected with said first rod member at the other end thereof.

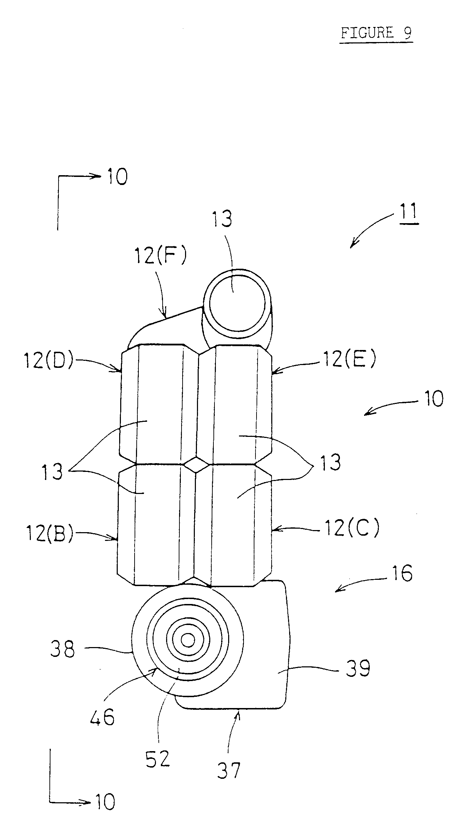

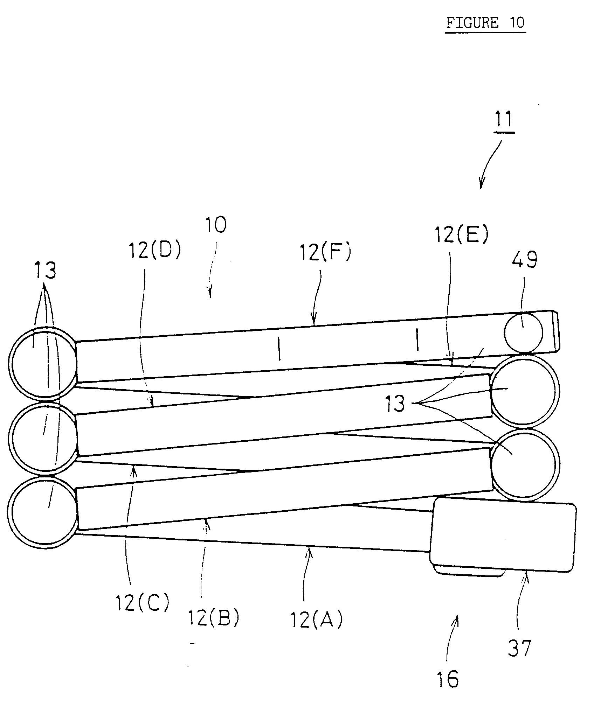

Therefore, as may be seen in figures 9 and 10, when the locking device is not in use and folded by rotating all the rod-like members about the axis of pivot shafts connecting said rod members to each other, the left (or right) side of the lock housing overlaps the first rod-like member on the right or left side and the right or left side of the lock housing overlaps the second rod-like member on the right or left side.

As a result, even if the lock housing constituting the outer shell of the locking unit or lock section is of a large size, part of the lock housing is restricted from largely protruding outwards in the right or left direction from the folded lock rod because the lock housing is located to span both right and left rod-like members.

According to another preferred embodiment of the invention, the lock housing comprises the above-mentioned main portion defining a hole for accommodating the lock means and a side section defining a receiving hole for receiving the end portion of a last rod member of said locking body, said main portion longitudinal direction of the first rod member fixedly connected with the lock housing, and said receiving hole of the side section having its longitudinal axis extending substantially perpendicular and offset with respect to the longitudinal axis of the main portion of the lock housing. Preferably, the lock means comprises a locking shaft for engaging an end portion of the last member of the locking body inserted into the receiving hole of the side section of the lock housing, said locking shaft being movably supported in the hole defined in the main portion of the lock housing.

In a preferred embodiment, said locking shaft is provided with an arcuate recess extending crossways with respect to the locking shaft in the direction of the last rod member inserted into the receiving hole of the side section, said last member, in turn, being provided with an arcuate recess for receiving said locking shaft, said recess extending crossways with respect to said last rod member in the direction of the locking shaft.

When the locking shaft is rotated to a specified position, the free end of the lock rod, that is the end of the last rod member, can be inserted and when the last rod member is inserted, the locking shaft can be rotated to a locking position to engage with the recess formed on the last rod member of the locking body.

Such an arrangement permits to increase the cross-sectional area of the locking shaft and the locking body in the main portion of the lock housing, thereby increasing the strength of the locking unit substantially and sufficiently.

Although the above arrangement increases the size of the lock housing for accommodating the locking shaft and the free end of the locking body, the lock housing is prevented from largely protruding from the folded lock rod when the locking device is not in use.

According to yet another preferred embodiment of the present invention, the longitudinal axis of the receiving hole of the side section for receiving the last rod member intersects the extension of the longitudinal axis of said first rod member. That permits a very compact configuration of the locking unit.

Further preferred embodiments of the present invention are laid down in further dependent claims.

Hereinafter, the present invention is illustrated and explained in greater detail by means of a preferred embodiment thereof in conjunction with accompanying drawings, wherein:
Figure 1 is a plane view of a locking device comprising a plurality of rod members with a locking unit fixedly connected with one of the rod members according to a preferred embodiment of the present invention,
Figure 2 is a perspective view of a locking device in use in connection with a front wheel of a motor cycle,
Figure 3 is a left side view of the locking device according to the preceding figures when it is formed in a loop,
Figure 4 is a partial enlarged view of the locking device according to the embodiment of figure 1, showing the connection between two adjacent rod members,
Figure 5 is a view as seen in the direction of arrows 5-5 in figure 4,
Figure 6 is a partial enlarged view of a locking unit including a locking shaft and the end portion of the last rod member inserted into said locking unit according to the embodiment of the preceding figures,
Figure 7 is a partial enlarged view of the locking unit according to the embodiment of the preceding figures in a view similar to figure 3,
Figure 8 is a view as seen in the direction of arrows 8-8 in figure 7,
Figure 9 is a front view of the locking device in a folded condition, and
Figure 10 is a view as seen in the direction of arrows 10-10 in figure 9.

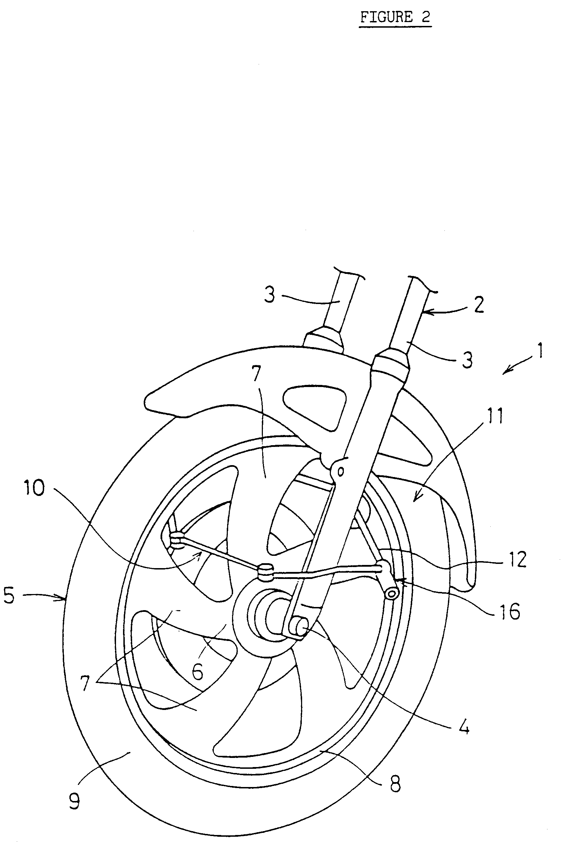

FIG. 2 shows a motorcycle (1) as an example of a type of vehicle riding on a saddle. The motorcycle (1) has a front fork (2) at its front part and the front fork (2) has a right and left pair of fork tubes (3), (3). A wheel shaft (4) is arranged at the lower ends of the fork tubes (3), and the wheel shaft (4) supports a front wheel (5) consisting of a hub (6), spokes (7), a rim (8), and a tire (9).

When the motorcycle (1) is parked, a theft prevention lock device (11) is provided for preventing the rotation of the front wheel (5).

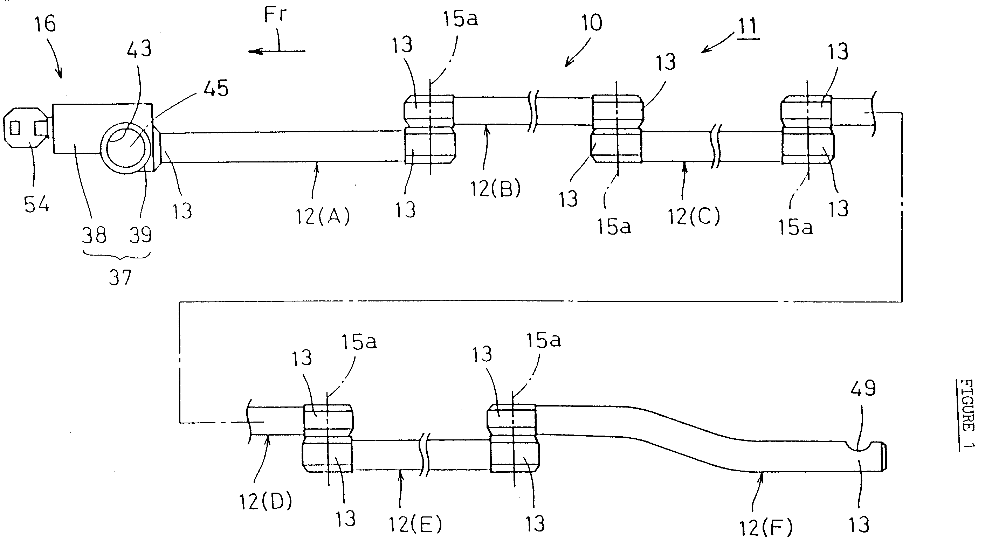

The lock device (11) shown in FIG. 1 includes six rod-like members (12) arranged in a row. For convenience of explanation, the direction of the arrow (Fr) in FIG. 1 is assumed as forward and the words right and left are construed as seen in the direction of the arrow (Fr).

The rod-like members (12) have a circular cross section and a generally identical length, and arranged on right and left sides by turns as seen in the forward direction. Ends (13), (13) facing each other of adjoining rod-like members (12), (12) overlap each other from right and left directions. The ends (13), (13) are pivoted by a pivot shaft (15) with its axis (15a) extending in the right and left directions. The pivot shaft (15) intersects opposing surfaces (14), (14) in the overlapped areas of the ends (13), (13) approximately at right angles. Both rod-like members (12), (12) can make articulate movements freely about the axis (15a) of the pivot shaft (15).

The lock rod (10) is constituted with the rod-like members (12) and the pivot shafts (15) and can be formed from the state of a line into a loop by the articulate movements of the rod-like members (12) about the axes (15a) of the pivot shafts (15), and can be folded by zigzag bending of the rod-like members (12).

The rod-like members (12) and the pivot shafts (15) are made of a metal or case-hardened chromium molybdenum steel to provide sufficient hardness.

As shown in FIGs. 1 through 3, the lock device (11) is provided with the lock section (16) capable of locking both ends of the lock rod (10) bent as described above in connected state.

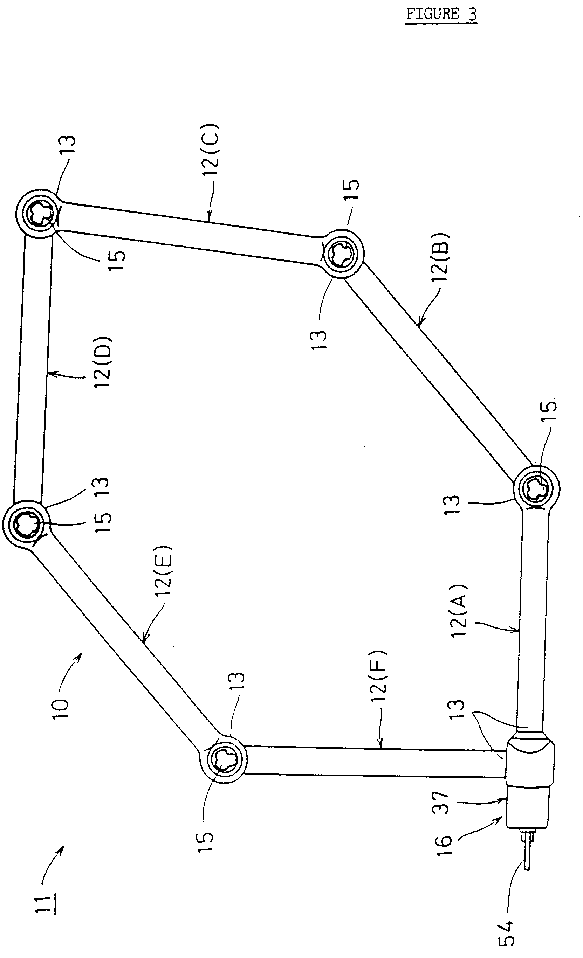

Referring to FIGs. 2 and 3, when the motorcycle (1) is parked and is to be prevented from being stolen, one end of the lock device (10) in the state of its both ends not connected to each other is inserted between two spokes (7) and the lock rod (10) is bent to form a curved line by articulate movements of the rod-like members (10) to surround part of the tire (9) and the fork tubes (3).

As shown with solid lines in FIGS. 2 and 3, both ends of the lock rod (10) are locked in connected state by the lock section (16) so that the front wheel (5) is prevented from rotating and the motorcycle (1) is prevented from being stolen.

Referring to FIGs. 1, 4 and 5, the pivot portion of adjoining rod-like members (12), (12) will be described below more in detail.

One of ends (13), (13) of the rod-like members (12), (12) is provided with a through hole (19) of a circular cross section while the other end (13) is provided with a bottomed female threaded hole (20). The through hole (19) and the threaded hole (20) are lined up on the same axis (15a). The through hole (19) has a smaller diameter hole (23) on the side nearer to the threaded hole (20) and a larger diameter hole (24) on the farther side, with a step surface (25) formed in between.

In its longitudinal middle portion, the pivot shaft (15) has a main portion (27) of a circular cross section to be inserted into the smaller diameter hole (23) of the through hole (19). A head portion (28) to be inserted into the larger diameter hole (24) is formed on one end of the main portion (27). A male thread portion (29) is formed on the other end of the main portion (27).

The outer diameter of the male thread portion (29) is made smaller than that of the main portion (27) and a step surface (30) is formed between the portions (27) and (29). The step surface (30) of the pivot shaft (15) comes into press contact with one of the opposing surfaces (14) of the ends (13) in which the female threaded hole (20) is formed, and the pivot shaft (15) is tightened to the end (13). Here, the end (13) in which the through hole (19) is formed is prevented from coming off the pivot shaft (15) as the step surface (25) in the through hole (19) is in contact with the head portion (28) of the pivot shaft (15). In this state, both rod-like members (12), (12) are free to make articulate movements about the axis (15a) of the pivot shaft (15).

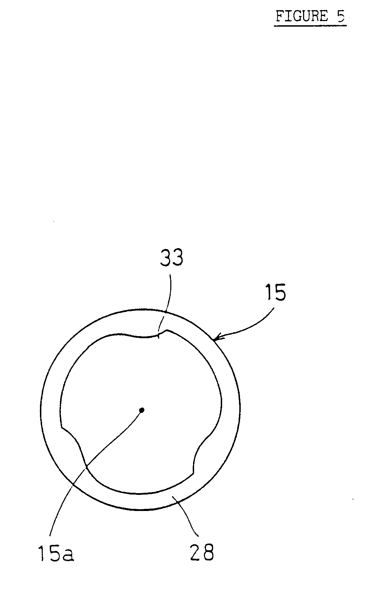

Referring to FIG. 5 in particular, the head portion (28) is formed with a tool engagement portion (33) capable of engagement with a special tool only so that the pivot shaft (15) is tightened to the end of the rod-like member (12) as described above. Since the head portion (28) and the tool engagement portion (33) are recessed in the larger diameter hole (24), easy access to the tool engagement portion (33) for theft or tampering is prevented.

One of the opposing surfaces (14), (14) is made to be a concave surface (14a) of a truncated conical shape and the other opposing surface (14) is made to be a convex truncated conical shape surface (14b) for fitting on the concave surface (14a). These concave and convex surfaces (14a) and (14b) are generally of the same size and generally centered on the axis (15a) of the pivot shaft (15). As a result, these concave and convex surfaces (14a) and (14b) are very close to each other or in surface contact to be freely slidable about the pivot shaft (15).

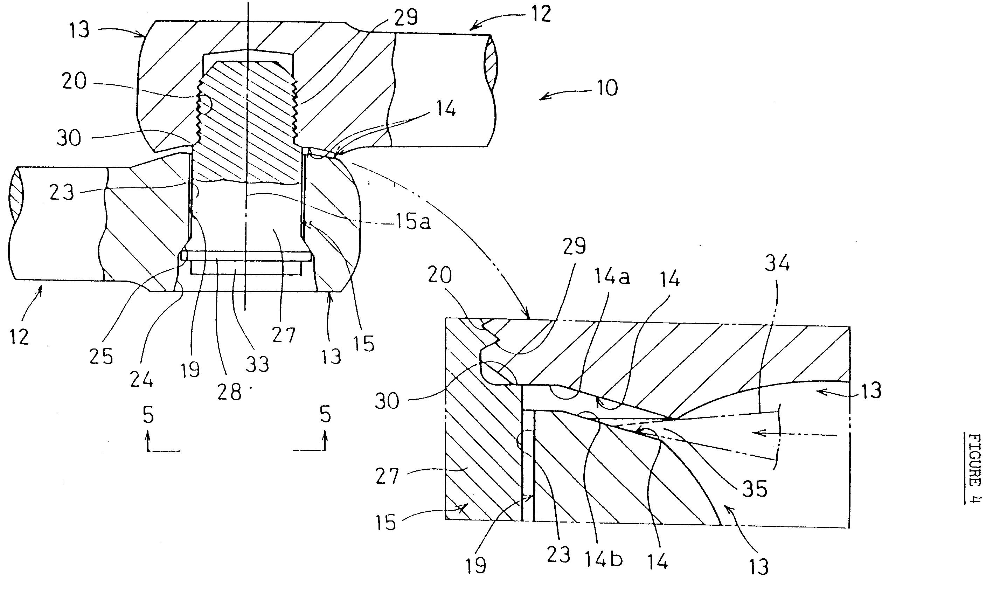

Referring to FIG. 4, if a person intending to steal the motorcycle (1) inserts a tool (34) for the theft such as a chisel into a gap (35) between the opposing surfaces (14), (14), the chisel is thick to some extent and therefore the tip of the tool (34) comes into contact with the convex surface (14b) near the entrance of the gap (35).

Therefore, if the person intends to sever the pivot shaft (15), first the convex surface portion (14b) has to be severed. Since it is difficult to sever the pivot shaft (15), the theft of the motorcycle (1) is more reliably prevented.

In the case the above tool (34) is a metal cutting saw, when the saw is inserted into the gap (35), the tip of the saw comes into contact with the convex surface portion (14b) near the entrance of the gap (35).

Therefore, also in the case the metal cutting saw is used, the convex surface portion (14b) has to be severed before severing the pivot shaft (15). The severing is specially difficult when the metal cutting saw comes obliquely into contact with the convex surface portion (14b), which makes the cutting more difficult.

In FIGs. 1, 3, and 6 through 8, the plural number of rod-like members (12) constituting the lock rod (10) are referred to as the first rod-like member (12A) through the sixth rod-like member (12F) from one end or the front end to the other end or the rear end in succession.

The lock section (16) has the lock housing (37) constituting the outer shell consisting of a housing main part (38) of a bottomed cylindrical shape and a protrusion (39) protruding from the outer circumferential portion of the housing main part (38). An outer surface of the bottom of the housing main part (38) is secured by welding to one end or the front end of the first rod-like member (12A) so that the axis (40) of the first rod-like member (12A) and the axis (41) of the housing main part (38) are approximately parallel to each other.

In the protrusion (39), a fitting hole (43) is formed to connect inside and out side of the protrusion (39) to each other. The axis (44) of the fitting hole (43) intersects at right angles a line parallel to the axis (41) of the housing main part (38) and intersecting the axis (44), and a line intersecting the axis (44) and extending in right and left directions. When the lock rod (10) is bent to form a loop, the end of the sixth rod-like member (12F) constituting the other end of the lock rod (10) is made to fit or come out of the fitting hole (43) freely, and a space (45) for receiving the end of the sixth rod-like member (12F) is formed in the deep part of the fitting hole (43) in the lock housing (37).

The lock section (16) has the lock section main part (46) which has the lock shaft (47) received in the housing main part (38) and freely rotatable about the axis (41) of the lock housing (38). An arcuate recess (48) is formed on the outer circumferential surface at an axially middle position of the lock shaft (47). The cross section at the position where the recess (48) is formed is of a semicircular shape.

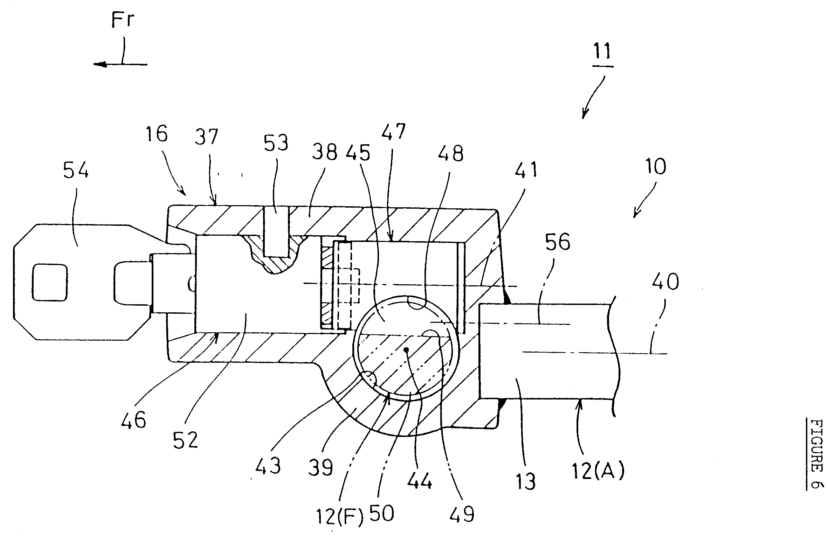

When the lock shaft (47) is rotated so that the center of the arc of the inner circumferential surface of the recess (48) approximately agrees with the axis (44) of the fitting hole (43) as shown with solid lines in FIGs. 6 through 8 (this state is hereinafter referred to as "the first rotated attitude"), the end of the sixth rod-like member (12F) constituting the other end of the lock rod (10) is made possible to enter the fitting space (45) through the fitting hole (43). Thus, the end circumferential surface of the sixth rod-like member (12F) is inserted freely removably into the recess (48).

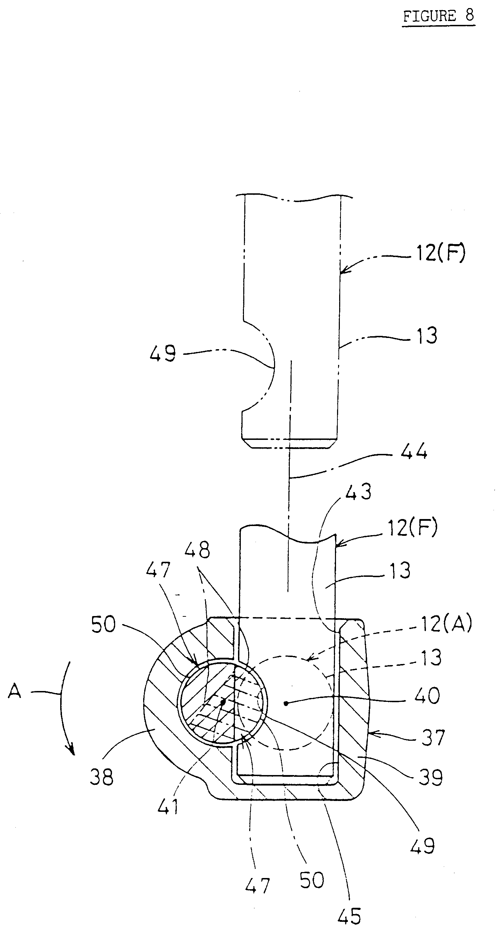

An arcuate recess (49) is formed on the outer circumferential portion of the sixth rod-like member (12F) so that the recess (49) faces the recess (48) when the lock shaft (47) is in the first rotated attitude and the end outer circumferential surface of the sixth rod-like member (12F) is inserted into the recess (48) formed in the lock shaft (47). When the lock shaft (47) is rotated from the state described above to a specified position (hereinafter referred to as the "second rotated attitude"), an arcuate outer circumferential portion (50) on the back side of the recess (48) in the lock shaft (47) fits freely removably in the recess (49) as shown with phantom lines in FIG. 8.

The lock (52) is provided for locking the lock shaft (47) onto the lock housing (37) side when the lock shaft (47) is in the "second rotated attitude" and the arcuate outer circumferential portion (50) of the lock shaft (47) is fit in the recess (49) in the sixth rod-like member (12F).
This lock (52) constituting the lock section main part (46) is housed in and secured to the housing main part (38) by means of a lock pin (53).

The lock (52) is locked or unlocked by a key (54) operation in such a way that, as shown with solid lines in the drawings, when the key (54) is inserted freely removably into the lock (52) and rotated about the axis (41), the lock shaft (47) rotates together with the rotation of the key (54) about the axis (41).

When the lock shaft (47) is rotated to the "first rotated attitude" by the key (54) as shown with solid lines in FIGs. 6 through 8, the lock (52) is unlocked. Namely the end of the sixth rod-like member (12F) is set free to be inserted into or removed from the recess (48) in the lock shaft (47) through the fitting hole (43). When the lock is opened, the key (54) remains engaged on the lock (52) side and cannot be removed from the lock (52).

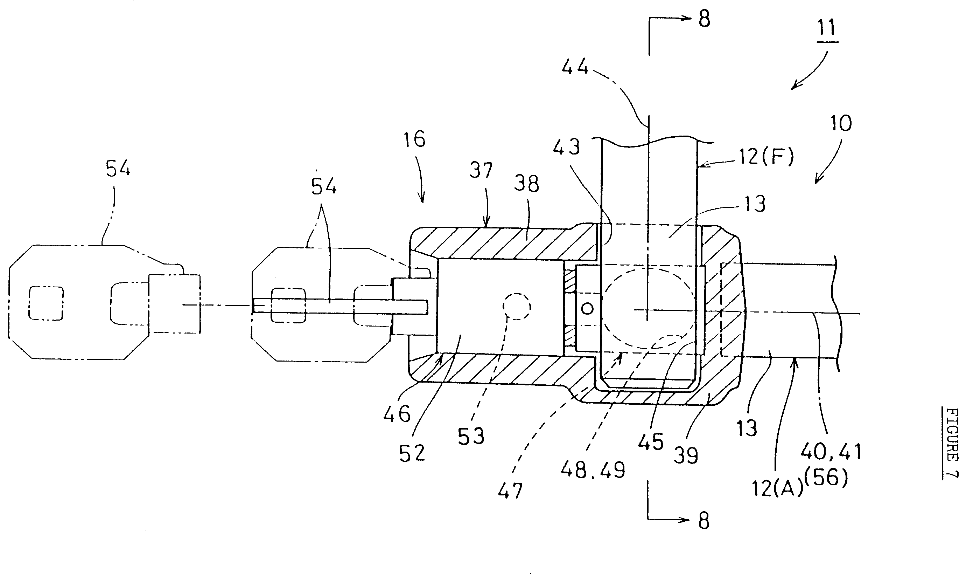

On the other hand, the lock (52) is locked when the lock shaft (47) is set to the "first rotated attitude" and the end of the sixth rod-like member (12F) is inserted through the fitting hole (43) into the fitting space (45) and the recess (48) in the lock shaft (47), and then the lock shaft (47) is set to the "second rotated attitude" as shown with phantom lines in FIG. 8 by rotating the key (54) as shown with phantom lines in FIG. 7 and the arrow (A) in FIG. 8. In other words, the end of the sixth rod-like member (12F) is locked to the lock housing (37) side and both ends of the lock rod (10) are locked in a state of connected to each other. When locking in this way, the key (54) is disengaged from the lock (52) and can be removed from the lock (52) as shown with phantom lines in FIG. 7.

In FIGs. 1 and 6, of all the rod-like members (12), the rear part of the sixth rod-like member (12F) is bent so that its rear part is displaced toward left relative to its front part, while each of the other rod-like members (12) is formed in a straight line.

The rear parts of the first, third, fifth, and sixth rod-like members (12A, 12C, 12E, and 12F; hereinafter referred to as the first rod-like member (12A), etc.) are displaced laterally by approximately the same amount.

On the other hand, the front parts of the second, fourth, and sixth rod-like members (12B, 12D, and 12F; hereinafter referred to as the second rod-like member (12B), etc.) are displaced laterally by approximately the same amount. As a result, the rod-like members (12) are displaced right and left by turns.

Thus, the laterally central portion (56) of the lock housing (37) is displaced on the same lateral side with the second rod-like member (12B) relative to the first rod-like member (12A).

As a result, the left (or right) side of the lock housing (37) and the first rod-like member (12A), etc. are located on the left (or right) side, and the right (or left) side of the lock housing (37) and the second rod-like members (12B), etc. are located on the right (or left) side.

Thus, as shown in FIGs. 9 and 10, when the lock device (11) is not in use and the lock rod (10) is folded by articulate movements of the rod-like members (12) about the laterally extending axes (15a) of the pivot shafts (15), the left (or right) side of the lock housing (37) and the first rod-like member (12A), etc. overlap each other on the left (or right) side while the right (or left) side of the lock housing (37) and the second rod-like member (12B), etc. overlap each other on the right (or left) side.

As a result, even if the lock housing (37) is large, since the lock housing is located to span laterally the rod-like members (12), part of the lock housing (37) is restricted from projecting largely beyond the folded lock rod (10).

In the above arrangement, the lock section (18) can be made strong enough by enlarging cross sections of the lock shaft (47) in the lock section main part (46) and the other end of the lock rod (10) or the end of the sixth rod-like member (12F) to make theft prevention more reliable by the lock device (11).

Although the above arrangement increases the size of the lock housing (37) for accommodating the lock shaft (47) and the other end of the lock rod (10), part of the lock housing (37) is restricted from projecting largely from the folded lock rod (10) as described above when the lock device (11) is not in use and the lock rod (10) is folded.

Furthermore in the above arrangement, the axis (40) of the first rod-like member (12A) and the axis (41) of the lock shaft (47) are approximately parallel to each other, and the lock shaft (47) and the insertion space (45) for the other end of the lock rod (10) in the lock housing (37) are arranged side by side on the right and left.

As a result, the lock housing (37) accommodating the lock shaft (47) and the insertion space (45) becomes large especially in the width in right and left directions, increase in the size of the lock housing (37) in other directions is restricted accordingly.

Even if the right to left width of the lock housing (37) increases as described above, right and left sides of the lock housing (37) are restricted from largely projecting from the folded lock rod (10) and the lock device (11) is made compact enough.

While the above description is made in reference to the examples shown in the drawings, the staggered arrangement of the rod-like members (12) need not be regular. For example, the arrangement of FIG. 1 may be changed to be irregular so that the second rod-like member (12B) is located on the left of the third rod-like member (12C) and the third rod-like member (12C) is located on the right of the fourth rod-like member (12D).

Also, the first rod-like member (12A) need not necessarily directly adjoin the second rod-like member (12B) but another rod-like member (12) may intervene in between. Furthermore, the number of the rod-like members (12) is not limited to six as the above example but may be any plural number. Also, the sixth rod-like member (12F) may be linear.

The lock device (11) may also be used for house doors and the like.

As described above, the laterally central portion of the lock housing is displaced either right or left side on which the second rod-like member adjoining the first rod-like member is located relative to the first rod-like member constituting one end of the lock rod.

As a result, one of the right and left sided of the lock housing and the first rod-like member are located on the same right or left side, and the other side of the lock housing and the second rod-like member are located on the same other side.

Therefore, when the lock device is not in use and the lock rod is folded by articulate movements of the rod-like members about the laterally extending pivot shafts, one side of the lock housing and the first rod-like member overlap each other on the same right or left side while the other end of the lock housing and the second rod-like member overlap each other on the other side.

As a result, even if the lock housing constituting the outer shell of the lock section is large, the lock housing is located to span laterally the rod-like members, and therefore part of the lock housing is restricted from projecting largely from the folded lock rod, so that the lock device is made compact enough.

The above arrangement may be modified as follows: The lock section main part is constituted with a lock shaft housed in the lock housing, having a semicircular cross section and capable of rotating about its axis, and a lock capable of locking the lock shaft which is received in the lock housing and rotated to a specified position. On the other hand, the other end of the lock rod is formed on its outer circumference with a recess so that the arcuate outer circumferential portion of the lock shaft can freely removably fit into the recess when the other end of the lock rod is fit into the lock housing and the lock shaft is rotated to the specified position.

In the above arrangement, the strength of the lock section can be sufficiently increased by enlarging cross sections of the lock shaft in the lock section main part and the other end of the lock rod so that theft is prevented more reliably by the lock device.

Although the above arrangement increases the size of the lock housing accommodating the lock shaft and the other end of the lock rod, part of the lock housing is restricted from largely projecting from the folded lock rod when the lock device is not in use and folded as described before, so that the lock device is made compact enough.

It may also be arranged that the first rod-like member axis and the lock shaft axis are parallel to each other, and the lock shaft and the fitting space for the other end of the lock rod in the lock housing are located right and left.

With such an arrangement, while the lock housing accommodating the lock shaft and the fitting space becomes wide especially in right and left directions, widening in other directions is restricted accordingly.

Even if the lock housing becomes wide in right and left directions as described above, the right and left sides of the lock housing are restricted from largely projecting from the lock rod when the lock rod is not in use and folded, the lock device is made compact enough, and the lock device has a reasonable shape from the viewpoint of compactness.

## Claims

1. Locking device comprising a locking body (10) having a plurality of rod members (12) hinged to each other in a row such that adjacent rod members (12) overlap each other with adjacent end portions (13) lying side by side and are hinged to each other by means of a pivot connection comprising a common pivot pin (15) for connecting the end portions (13) of each pair of adjacent rod members (12) of the locking body (10) and a locking unit (16) for connecting and locking two ends of said locking body (10) to each other, said locking unit (16) comprising a lock housing (37) which is fixedly connected to the first rod member (12A) of said locking body (10) and includes a main portion (38) for accommodating a lock means (52,47) for locking the other end of said locking body (10) in a position connected with said lock housing (37), **characterised in that** said main portion (38) having its longitudinal axis (41) extending in parallel with the longitudinal direction of the first rod member (12A) while being disposed offset towards the same side of said first rod member (12A) on which side a second rod member (12B) is disposed.

2. Locking device according to claim 1, **characterised in that** the lock housing (37) also comprises a side section (39) defining a receiving hole (43) for receiving the end portion of a last rod member (12F) of said locking body (10), said receiving hole (43) of the side section having its longitudinal axis (44) extending substantially perpendicular and offset with respect to the longitudinal axis (41) of the main portion (38) of the lock housing (37).

3. Locking device according to claim 2, **characterised in that** said longitudinal axis (44) of the receiving hole (43) of the side section intersects the extension of the longitudinal axis (40) of said first rod member (12A).

4. Locking device according to one of claims 2 or 3, **characterised in that** the lock means comprises a locking shaft (47) for engaging an end portion of the last member (12F) of the locking body inserted into the receiving hole (43) of the side section (39) of the lock housing, said locking shaft (47) being movably supported in the hole defined in the main portion (38) of the lock housing.

5. Locking device according to claim 4, **characterised in that** said locking shaft (47) is provided with an arcuate recess (48) extending crossways with respect to the locking shaft in the direction of the last rod member (12F) inserted into the receiving hole (43) of the side section, said last member (12F), in turn, being provided with an arcuate recess (49) for receiving said locking shaft (47), said recess (49) extending crossways with respect to said last rod member (12F) in the direction of the locking shaft (47).

6. Locking device according to claim 5, **characterised in that** said locking shaft (47) is rotatable in said hole defined in the main portion (38) of the lock housing (37) around its longitudinal axis (41) between a non-locking position in which the arcuate recess (48) of the locking shaft (47) faces the receiving hole (43) of the side section for inserting and removing the last rod member (12F) into and from said side section (39), and a locking position in which said locking shaft (47) is engaged with the recess (49) formed on the last rod member (12F) of the locking body (10).

7. Locking device according to one of claims 1 to 6, **characterised in that** the lock means comprises a lock (52) to be operated by a key (54), said lock (52) being rotatably supported in the hole defined in the main portion (38) of the lock housing and engaged with the locking shaft (47) for rotating the same.

## Patentansprüche

1. Verriegelungsvorrichtung mit einem Verriegelungskörper (10), der eine Vielzahl von Stabelemente (12) aufweist, die derart in einer Reihe miteinander verbunden sind, daß aneinander angrenzende Stabelemente (12) sich jeweils mit aneinander angrenzenden Endabschnitten (13) überlappen, die Seite an Seite angeordnet und miteinander mittels einer Schwenkverbindung verbunden sind, die einen gemeinsamen Schwenkzapfen (15) aufweist, um die Endabschnitte (13) eines jeden Paares von einander angrenzenden Stabelementen (12) des Verriegelungskörpers (10) zu verbinden, und mit einer Verriegelungseinheit (16) zur Verbindung und zur Verriegelung von zwei Enden von diesem Verriegelungskörper (10) miteinander, wobei diese Verriegelungseinheit (16) ein Verriegelungsgehäuse (37) aufweist, das fest an dem ersten Stabelement (12A) des Verriegelungskörpers (10) angeschlossen ist und einen Hauptteil (38) zur Aufnahme einer Verriegelungseinrichtung (52, 47) enthält, um das andere Ende von diesem Verriegelungskörper (10) in einer mit diesem Verriegelungsgehäuse (37) verbundenen Position zu verriegeln, **dadurch gekennzeichnet**, daß der Hauptteil (38) mit seiner Längsachse (41) derart ausgerichtet ist, daß sie sich parallel zu der Längsrichtung des ersten Stabelementes (12A) erstreckt, während er zur gleichen Seite des ersten Stabelementes (12A) versetzt angeordnet ist, an welcher Seite ein zweites Stabelement (12B) angeordnet ist.

2. Verriegelungsvorrichtung nach Anspruch 1, **dadurch gekennzeichnet**, daß das Verriegelungsgehäuse (37) des weiteren einen Seitenabschnitt (39) aufweist, der ein Aufnahmeloch (43) definiert zur Aufnahme des Endabschnittes von einem letzten Stabelement (12F) des Verriegelungskörpers (10), wobei dieses Aufnahmeloch (43) des Seitenabschnittes mit seiner Längsachse (44) derart ausgerichtet ist, daß sie sich im wesentlichen senkrecht sowie bezüglich der Längsachse (41) das Hauptteil (38) des Verriegelungsgehäuses (37) versetzt erstreckt.

3. Verriegelungsvorrichtung nach Anspruch 2, **dadurch gekennzeichnet**, daß die Längsachse (44) des Aufnahmeloches (43) des Seitenabschnittes die Verlängerung der Längsachse (40) des ersten Stabelementes (12A) schneidet.

4. Verriegelungsvorrichtung nach einem der Ansprüche 2 oder 3, **dadurch gekennzeichnet**, daß die Verriegelungseinrichtung einen Verriegelungsschaft (47) umfaßt zum in Eingriff bringen eines Endabschnittes des letzten Elementes (12F) des in das Aufnahmeloch (43) des Seitenabschnittes (39) des Verriegelungsgehäuses eingeführten Verriegelungskörpers, wobei diese Verriegelungswelle (47) in dem von dem Hauptteil (38) des Verriegelungsgehäuses definierten Loch bewegbar abgestützt ist.

5. Verriegelungsvorrichtung nach Anspruch 4, **dadurch gekennzeichnet**, daß die Verriegelungswelle (47) mit einer bogenförmigen Aussparung (48) versehen ist, die sich quer bezüglich der Verriegelungswelle in Richtung des letzten Stabelementes (12 F) erstreckt, das in das Aufnahmeloch (43) des Seitenabschnittes eingefügt ist, wobei dieses letzte Element (12 F) wiederum zur Aufnahme dieser Verriegelungswelle mit einer bogenförmigen Aussparung (49) versehen ist und diese Aussparung (49) sich bezüglich des letzten Stabelementes (12F) sich quer in die Richtung der Verriegelungswelle (47) erstreckt.

6. Verriegelungsvorrichtung nach Anspruch 5, **dadurch gekennzeichnet**, daß die Verriegelungswelle (47) in dem von dem Hauptteil (38) des Verriegelungsgehäuses (37) definierten Loch um ihre Längsachse (41) zwischen einer entriegelten Position, in welcher die bogenförmige Aussparung (48) der Verriegelungswelle (47) dem Aufnahmeloch (43) des Seitenabschnittes zum Einführen und Entfernen des letzten Stabelementes (12F) in und aus dem Seitenabschnfitt (39) heraus gegenüberliegt, und einer Verriegelungsposition, in welcher diese Verriegelungswelle (47) sich im Eingriff mit der Aussparung (49) befindet, die in dem letzten Stabelement (12F) des Verriegelungskörpers (10) ausgebildet ist, drehbar ist.

7. Verriegelungsvorrichtung nach einem der Ansprüche 1 bis 6, **dadurch gekennzeichnet**, daß die Verriegelungseinrichtung ein Schloß (52) umfaßt, das von einem Schlüssel (54) betätigbar ist, wobei dieses Schloß (52) in dem von dem Hauptteil (38) des Verriegelungsgehäuses definierten Loch drehbar abgestützt ist und sich im Eingriff mit der Verriegelungswelle (47) befindet, um diese zu drehen.

## Revendications

1. Dispositif de blocage antivol comprenant un corps de blocage (10) comportant une pluralité d'éléments de tige (12) montés en articulation l'un par rapport à l'autre en alignement de sorte que des éléments de tige adjacents (12) viennent chacun en recouvrement avec des parties d'extrémité adjacentes (13) disposées face à face et sont montés en articulation l'un par rapport à l'autre à l'aide d'une connexion par pivot comprenant un axe de pivotement commun (15) destiné à connecter les parties d'extrémité (13) de chaque paire d'éléments de tiges adjacents (12) du corps de blocage (10) et un ensemble de blocage (16) destiné à connecter et à bloquer l'une avec l'autre deux extrémités du dit corps de blocage (10), ledit ensemble de blocage (16) comprenant un boîtier de verrou (37) qui est connecté de manière fixe au premier élément de tige (12A) dudit corps de blocage (10) et comprend une partie principale (38) destinée à recevoir des moyens de verrou (52, 47) afin de bloquer l'autre extrémité dudit corps de blocage (10) dans une position de connexion avec ledit boîtier de verrou (37),
caractérisé en ce que ladite partie principale (38) a son axe longitudinal (41) qui s'étend de manière parallèle au sens longitudinal du premier élément de tige (12A), tout en étant disposée de manière décalée vers le même côté du dit premier élément de tige (12A), côté sur lequel est disposé un second élément de tige (12B).

2. Dispositif de blocage antivol selon la revendication 1, caractérisé en ce que le boîtier de verrou (37) comprend également une partie latérale (39) définissant un orifice de réception (43) destiné à recevoir la partie d'extrémité d'un dernier élément de tige (12F) du dit corps de blocage (10), ledit orifice de réception (43) de la partie latérale ayant son axe longitudinal (44) qui s'étend de manière essentiellement perpendiculaire et décalée par rapport à l'axe longitudinal (41) de la partie principale (38) du boîtier de verrou (37).

3. Dispositif de blocage antivol selon la revendication 2, caractérisé en ce que ledit axe longitudinal (44) de l'orifice de réception (43) de la partie latérale coupe l'extension de l'axe longitudinal (40) du dit premier élément de tige (12A).

4. Dispositif de blocage antivol selon l'une des revendications 2 ou 3, caractérisé en ce que les moyens de verrou comprennent un axe de blocage (47) destiné à s'engager dans une partie d'extrémité du dernier élément (12F) du corps de blocage introduite à l'intérieur de l'orifice de réception (43) de la partie latérale (39) du boîtier de verrou, ledit axe de blocage (47) étant supporté de manière mobile dans l'orifice défini dans la partie principale (38) du boîtier de verrou.

5. Dispositif de blocage antivol selon la revendication 4, caractérisé en ce que ledit axe de blocage (47) comporte un retrait en arc de cercle (48) qui s'étend de manière transversale par rapport à l'axe de blocage dans le sens du dernier élément de tige (12F) introduit à l'intérieur de l'orifice de réception (43) de la partie latérale, ledit dernier élément (12F) comportant, à son tour, un retrait en arc de cercle (49) destiné à recevoir ledit axe de blocage (47), ledit retrait (49) s'étendant de manière transversale par rapport au dit dernier élément de tige (12F) dans le sens de l'axe de blocage (47).

6. Dispositif de blocage antivol selon la revendication 5, caractérisé en ce que ledit axe de blocage (47) peut tourner dans ledit orifice défini dans la partie principale (38) du boîtier de verrou (37) autour de son axe longitudinal (41) entre une position de non-blocage dans laquelle le retrait en arc de cercle (48) de l'axe de blocage (47) fait face à l'orifice de réception (43) de la partie latérale afin d'introduire le dernier élément de tige (12F) à l'intérieur de ladite partie latérale (39) et de retirer celui-ci de cette dernière, et une position de blocage dans laquelle ledit axe de blocage (47) est engagé dans le retrait (49) formé sur le dernier élément de tige (12F) du corps de blocage (10).

7. Dispositif de blocage antivol selon l'une des revendications 1 à 6, caractérisé en ce que les moyens de verrou comprennent un verrou (52) destiné à être actionné par une clé (54), ledit verrou (52) étant supporté en rotation dans l'orifice défini dans la partie principale (38) du boîtier de verrou et en engagement avec l'axe de blocage (47) afin de faire tourner celui-ci.
